# EUROPEAN PATENT APPLICATION

(11) **EP 4 611 065 A1**
(43) Date of publication of application: **03.09.2025**
(21) Application number: 24854478.5
(22) Date of filing: 16.08.2024
(51) Int. Cl.: H01M 4/36, H01M 4/525, H01M 4/485, H01M 10/0562, H01M 10/42, H01M 10/0525, H01M 4/02

(54) **POSITIVE ELECTRODE ACTIVE MATERIAL COMPOSITE, POSITIVE ELECTRODE COMPRISING SAME, AND LITHIUM ION SECONDARY BATTERY COMPRISING POSITIVE ELECTRODE**

(30) Priority: 16.08.2023 KR 20230106837; 14.08.2024 KR 20240109422
(71) Applicant: LG Energy Solution, Ltd., Seoul 07335 (KR)
(72) Inventor: KIM, Myeongsoo, Daejeon 34122 (KR); KWON, Hyejin, Daejeon 34122 (KR); KIM, Sohee, Daejeon 34122 (KR); LEE, Choonghyeon, Daejeon 34122 (KR); CHOI, Seokin, Daejeon 34122 (KR); OH, Kyungbae, Daejeon 34122 (KR); KANG, Sora, Daejeon 34122 (KR)
(74) Representative: Goddar, Heinz J.
(86) International application number: PCT/KR2024/012181
(87) International publication number: WO 2025/037927

(57) **Abstract**

The present invention provides a positive electrode active material composite comprising a positive electrode active material substrate and a coating layer comprising a compound represented by Formula 1 below coated on the positive electrode active material substrate, a positive electrode comprising the positive electrode, and a lithium-ion secondary battery comprising the positive electrode.

[Formula 1] LiₐTi_{b}O_{c-d}X_{d}

## Description

### [Technical Field]

This application claims the benefit of priority to Korean Patent Application No. 10-2023-0106837, filed August 16, 2023, and Korean Patent Application No. 10-2024-0109422, filed August 14, 2024, the disclosures of which are incorporated herein by reference in their entirety.

The present invention relates to a positive electrode active material composite, a positive electrode comprising the same, and a lithium-ion secondary battery comprising the positive electrode.

### [Related Art]

Compared to nickel-manganese or nickel-cadmium batteries, lithium-ion secondary batteries have the advantages of higher energy density, lower self-discharge rate, and longer lifetime, but their disadvantages include poor stability against overheating and low power output.

To overcome the problems of lithium-ion secondary batteries, all-solid-state batteries have been proposed as an alternative. The all-solid-state battery comprises an electrolyte layer comprising a solid electrolyte, and a positive electrode layer and a negative electrode layer comprising the solid electrolyte are formed on both sides of the electrolyte layer, and each electrode has a structure in which a current collector is coupled.

The all-solid-state batteries can be divided into oxide-based, polymer-based, and sulfide-based batteries according to the raw material of the solid electrolyte. The sulfide-based all-solid-state batteries exhibit superior lithium-ion conductivity to other types of batteries. Nevertheless, compared to conventional liquid electrolyte-based batteries, they suffer from low ionic conductivity and high electrical resistance between the positive electrode/negative electrode/solid electrolyte, which reduces their lifespan and power output.

In other words, the positive electrode active material and the sulfide-based solid electrolyte are known to react with each other at the interface to form a resistive material that interferes with the operation of the all-solid-state battery. The resistive material reduces the initial capacity of the all-solid-state battery and its efficiency.

To address these issues, techniques are known to form various coating layers on the surface of the positive electrode active material. For example, there are known techniques for coating lithium oxides of Li-M-O (wherein M is B, Al, Zr, P, Ti, Nb, W, etc.) on the surface of positive electrode active materials.

However, this type of coated positive electrode active material does not appear to be effective enough in reducing the interfacial resistance between the positive electrode active material and the sulfide-based solid electrolyte and improving lithium ion conductivity.

### [Prior Art Reference]

### [Patent Reference]

Korean Laid-open Patent Publication No. 10-2018-0123369

### [Detailed Description of the Invention]

### [Technical Problem]

The present invention is designed to solve the above problems of the prior art, it is an object to provide a positive electrode active material composite, which can improve the drive characteristics and life characteristics of the battery by reducing the interfacial resistance between the positive electrode active material and the solid electrolyte, and by improving the lithium-ion conductivity, a positive electrode comprising the positive electrode active material composite, and a lithium-ion secondary battery comprising the positive electrode.

### [Technical Solution]

To accomplish the above objectives, the present invention provides a positive electrode active material composite comprising a positive electrode active material substrate and a coating layer comprising a compound represented by Formula 1 below coated on the positive electrode active material substrate.

[Formula 1] LiₐTi_{b}O_{c-d}X_{d}
wherein X is N, P, or S, and
1≤a≤6, 1≤b≤6, 3≤c≤15, and 0<d≤1.5.

The present invention also provides a positive electrode comprising the positive electrode active material composite of the present invention.

The present invention also provides a lithium-ion secondary battery comprising a positive electrode, a negative electrode, and a solid electrolyte layer disposed between the positive electrode and negative electrode of the present invention.

### [Advantageous Effects]

The positive electrode active material composite of the present invention provides the effect of reducing the interfacial resistance between the positive electrode active material and the solid electrolyte by a coating layer formed on the surface of the positive electrode active material and improving the lithium ion conductivity.

Furthermore, it provides the effect of improving the drive characteristics and life characteristics of the battery by the above effects.

By including the positive electrode active material, the lithium-ion secondary battery of the present invention provides excellent drive characteristics and life characteristics.

### [Best Mode]

Hereinafter, the present invention will be described in more detail to provide a better understanding of the present invention.

The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention. Further, the terminology used herein is used to describe exemplary examples only and is not intended to limit the invention. Expressions in the singular include the plural unless the context clearly indicates otherwise.

When a component is referred to as being "connected to, comprised in, laminated on, or installed on" another component, it should be understood that it may be directly connected or installed on the other component, but that there may be other components in between. On the other hand, when a component is referred to as being "directly connected to or installed on" another component, it should be understood that there is no other component in between. Other expressions that describe relationships between components, such as "on top of" and "directly on top of", or "between" and "directly between", or "neighboring" and "directly neighboring", should be interpreted similarly.

As used herein, the term "combination" includes mixtures, alloys, reaction products, and the like, unless specifically indicated to the contrary.

The positive electrode active material composite of the present invention is characterized in comprising a positive electrode active material substrate and a coating layer comprising a compound represented by Formula 1 below coated on the positive electrode active material substrate.

[Formula 1] LiₐTi_{b}O_{c-d}X_{d}

wherein X is N, P, or S, and
1≤a≤6, 1≤b≤6, 3≤c≤15, and 0<d≤1.5.

The positive electrode active material composite of the present invention is characterized in that the interfacial resistance between the positive electrode active material and the solid electrolyte is lowered by including the coating layer, and the lithium ion conductivity is improved by the structure of the coating particles comprising the coating layer. In other words, the coating particles forming the coating layer have a form in which the oxygen contained in the LTO is substituted by the non-metallic element X, so that the crystal distance between the coating particles is increased compared to the conventional LTO coating particles, providing better lithium ion conductivity.

In addition to the compound of Formula 1, the coating layer may further comprise other coating substrates known in the art.

Preferably, the formula 1 has a range of 3≤a≤5, 4≤b≤6, 10≤c≤14, and 0<d≤1, and even more preferably, a may be 4, b may be 5, c may be 12, and d may be 0.1 to 0.3.

The positive electrode active material substrate may be a compound represented by Formula 2 below.

[Formula 2] Liₐ(Ni_{1-x-y-z}CoₓM1_{y}M2_{z})O₂

wherein M1 is manganese (Mn), aluminum (Al), or a combination thereof;
M2 is boron (B), magnesium (Mg), calcium (Ca), strontium (Sr), barium (Ba), titanium (Ti), vanadium (V), chromium (Cr), iron (Fe), copper (Cu), zirconium (Zr), aluminum (Al), or any combination of two or more thereof; and
0.95≤a≤1.3, 0<x<1, 0≤y<1, and 0≤z<1.

However, the positive electrode active material substrate is not limited to the above compounds, and it is possible to use or further comprise any positive electrode active material known in the art.

Specifically, at least one selected from the group consisting of NCM, NCMA, LFP, LCA, LCO, LMO, and the like may be used as the positive electrode active material substrate.

More specifically, LiNi_{0.8}Co_{0.1}Mn_{0.1}O₂, LiNi_{0.75}CO_{0.1}Mn_{0.1}Al_{0.05}O₂, LiFePO₄, and the like may be used.

The coating layer may be comprised in an amount of 0.1 to 5% by weight, more preferably 0.5 to 2% by weight, more preferably 0.7 to 1.3% by weight, based on the total weight of the positive electrode active material composite. If the coating layer comprises less than 0.1% by weight, the effect of reducing the interfacial resistance between the positive electrode active material and the solid electrolyte and improving the lithium ion conductivity may be minimal, and if it exceeds 5% by weight, it is undesirable because it may actually increase the interfacial resistance due to an increase in the lithium ion migration distance between the active material and the solid electrolyte.

Further, the thickness of the coating layer may be 10 nm to 200 nm.

The molar ratio of Ti to X in the coating layer may be 1 : 0.01 to 0.2, preferably 1 : 0.01 to 0.1, more preferably 1 : 0.02 to 0.06. If the molar ratio of X is less than 0.01, the distance between crystals decreases due to the increase in the content of oxygen element, so it is difficult to expect the effect of improving lithium ion conductivity, and if it exceeds 0.2, it is undesirable because the content of non-metallic elements increases, and the crystal structure of the existing lithium titanium oxide is destroyed and the homogeneous structure is not formed.

The coating layer may be formed by dry mixing of the positive electrode active material substrate and the coating substrate, but is not limited thereto, and may also be formed by a wet process. The dry mixing may be high shear mixing.

The particle size (D50) of the positive electrode active material substrate may be 10 nm to 10 µm, and the particle size (D50) of the coating substrate may be 10 nm to 200 nm.

In the present invention, the particle size may be measured using a particle size analyzer. For example, it can be measured using the Mastersizer 3000 (Malvern panalytical) instrument.

In one example of the present invention, the positive electrode active material composite may further comprise a solid electrolyte. In this case, the solid electrolyte may include the same solid electrolyte described below in the positive electrode active material layer.

The present invention also relates to a positive electrode comprising the positive electrode active material composite.

The positive electrode is characterized in that it comprises the positive electrode active material composite of the present invention. The description of the positive electrode active material composite is omitted as it follows the content previously described.

The positive electrode of the present invention may be of a free-standing type manufactured from a positive electrode active material layer component, and may also be in the form of a positive electrode active material layer laminated on a positive electrode current collector.

The positive electrode active material layer may further comprise positive electrode active materials known in the art in addition to the positive electrode active material composite.

Specific examples of positive electrode active materials known in the art include, but are not limited to, lithium cobaltate (hereinafter, referred to as LCO), lithium nickelate, lithium nickel cobaltate, lithium nickel cobalt aluminumate (hereinafter, referred to as NCA), lithium nickel cobalt manganate (hereinafter, referred to as NCM), lithium salts such as lithium manganate and lithium iron phosphate, and lithium sulfide.

The positive electrode active material layer may further comprise a solid electrolyte. As the solid electrolyte, any solid electrolyte known in the art may be used without limitation, for example, an oxide-based solid electrolyte, a polymer-based solid electrolyte, or a sulfide-based solid electrolyte may be used, and in particular, a sulfide-based solid electrolyte may be preferably used.

The sulfide-based solid electrolyte may comprise Li₂S-P₂S₅, Li₂S-P₂S₅-LiX (wherein X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers, and Z is one of Ge, Zn or Ga), Li₂S-GeS₂, Li₂S-SiS₂-Li₃PO₄, Li₂S-SiS₂-LiₚMO_{q} (wherein p and q are positive numbers, and M is one of P, Si, Ge, B, Al, Ga or In), or any combination thereof. The solid electrolyte may comprise one material selected from such sulfide-based solid electrolyte materials, or may comprise two or more materials selected therefrom.

The sulfide-based solid electrolyte may include a solid electrolyte represented by Formula 3 below.

[Formula 3] LiₓM'_{y}PS_{z}A_{w}
wherein x, y, z, and w are independently between 0 and 6, inclusive;
M' is at least one of As, Ge, Ga, Sb, Si, Sn, Al, In, Ti, V, Nb, or Ta; and
A is at least one of F, Cl, Br, or I.

As the solid electrolyte, a sulfide-based solid electrolyte material comprising sulfur (S), phosphorus (P) and lithium (Li) can be utilized as a component. For example, one that contains Li₂S-P₂S₅ can be used. When utilizing one comprising Li₂S-P₂S₅ as a sulfide-based solid electrolyte material, the mixing molar ratio of Li₂S and P₂S₅ may be selected in the range of, for example, 50:50 to 90:10.

The solid electrolyte may be comprised in an amount of 1 to 30% by weight, preferably 1 to 20% by weight, more preferably 10 to 20% by weight, based on the total weight of the positive electrode active material layer.

The positive electrode current collector may be a plate or foil form. The positive electrode current collector may be, for example, one metal or an alloy of two or more metals selected from indium, copper, magnesium, stainless steel, titanium, iron, cobalt, nickel, zinc, aluminum, germanium, and lithium.

Further, the positive electrode active material layer may further comprise a conductive agent, and a binder, and may further comprise additives such as fillers, dispersants, or ionic conductivity aids.

The conductive material used to impart conductivity to the electrode can be used without special restriction in the battery to be made as long as it has electronic conductivity without causing chemical changes. Specific examples include graphite, such as natural or artificial graphite; carbon-based materials, such as carbon black, acetylene black, ketjen black, channel black, furnace black, lamp black, summer black, carbon fiber, carbon nanotubes, and the like; metal powders or metal fibers, such as copper, nickel, aluminum, silver, and the like; conductive whiskers, such as zinc oxide or potassium titanate; conductive metal oxides, such as titanium oxide; or conductive polymers, such as polyphenylene derivatives, and one or a mixture of two or more selected therefrom may be used.

The conductive material may be typically comprised in an amount of 0.01 to 10% by weight, preferably 0.1 to 5% by weight, more preferably 0.1 to 2% by weight, based on the total weight of the positive electrode active material layer.

The binder serves to improve the adhesion between the positive electrode active material particles and the adhesion of the positive electrode active material to the positive electrode current collector. Specific examples include polytetrafluoroethylene (PTFE), polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof, and one or a mixture of two or more selected therefrom may be used.

The binder may be comprised in an amount of 0.5 to 20% by weight, preferably 1 to 10% by weight, more preferably 1 to 5% by weight, based on the total weight of the positive electrode active material layer.

As the filler, dispersant, or ionic conductivity aid, any of the known materials conventionally used for electrodes in lithium-ion secondary batteries may be used.

The positive electrode active material layer of the present invention may comprise 50 to 90% by weight of the positive electrode active material composite, 1 to 30% by weight of solid electrolyte, 0.1 to 5% by weight of conductive material, and 0.5 to 20% by weight of binder; preferably it may comprise 75 to 85% by weight of positive electrode active material composite, 10 to 20% by weight of solid electrolyte, 0.1 to 2% by weight of conductive material, and 0.5 to 3% by weight of binder.

The present invention also relates to a lithium-ion secondary battery comprising a positive electrode, a negative electrode, and a solid electrolyte layer disposed between the positive electrode and negative electrode.

The lithium-ion secondary battery may be an all-solid-state battery. An all-solid-state battery is defined as not only including a solid-state electrolyte, but also including an electrolyte with some liquid electrolytes added to the solid-state electrolyte.

Examples of the lithium-ion secondary battery will be described below.

The lithium secondary battery includes a positive electrode, a negative electrode positioned opposite the positive electrode, and a solid electrolyte layer interposed between the positive electrode and the negative electrode, and may optionally include a separator.

### (1) Positive electrode

The lithium-ion secondary battery of the present invention is characterized in that it comprises the positive electrode of the present invention described above. Therefore, the description of the positive electrode is omitted.

### (2) Negative electrode

The negative electrode includes a free-standing type of negative electrode and a type of negative electrode with a negative electrode active material layer laminated on the negative electrode current collector. The negative electrode in the lithium-ion secondary battery is not particularly limited, and any negative electrode known in the art may be used without limitation.

The negative electrode current collector is not particularly limited as long as it has a high conductivity without causing chemical changes in the battery, for example, copper, stainless steel, aluminum, nickel, titanium, calcined carbon, copper or stainless steel whose surface is treated with carbon, nickel, titanium, silver, etc., or aluminum-cadmium alloys. The negative electrode current collector may typically have a thickness of 3 to 500 µm, and, like the positive electrode current collector, microscopic irregularities may be formed on the surface of the current collector to enhance the binding of the negative electrode active material. Various forms can be used as a negative electrode current collector, e.g., films, sheets, foils, nets, porous materials, foams, nonwoven materials, etc.

The negative electrode active material layer comprises a negative electrode active material, which may optionally further comprise a binder and a conductive material. It may comprise further solid electrolytes.

As the negative electrode active material, a compound capable of reversible intercalation and deintercalation of lithium may be used. Specific examples may include carbon materials such as artificial graphite, natural graphite, graphitized carbon fiber, amorphous carbon, etc.; metallic substances capable of alloying with lithium, such as Si, Al, Sn, Pb, Zn, Bi, In, Mg, Ga, Cd, Si alloys, Sn alloys, or Al alloys; metal oxides capable of doping and de-doping lithium, such as SiO_{β} (wherein 0 < β < 2), SnO₂, vanadium oxide, lithium vanadium oxide, etc; or composites comprising the metallic substances and carbonaceous materials, such as Ag-C composites, Si-C composites, or Sn-C composites, and one or a mixture of two or more selected therefrom may be used.

In addition, a metallic lithium thin film may be used as the negative electrode active material, and an anodeless battery may not include a separate negative electrode active material.

The conductive material used to impart conductivity to the electrode can be used without special restriction in the battery to be made as long as it has electronic conductivity without causing chemical changes. Specific examples include graphite, such as natural or artificial graphite; carbon-based materials, such as carbon black, acetylene black, ketjen black, channel black, furnace black, lamp black, summer black, carbon fiber, carbon nanotubes, and the like; metal powders or metal fibers, such as copper, nickel, aluminum, silver, and the like; conductive whiskers, such as zinc oxide or potassium titanate; conductive metal oxides, such as titanium oxide; or conductive polymers, such as polyphenylene derivatives, and one or a mixture of two or more selected therefrom may be used.

The conductive material may be typically comprised in an amount of 1 to 30% by weight, preferably 1 to 20% by weight, more preferably 1 to 10% by weight, based on the total weight of the negative electrode active material layer.

The binder serves to enhance the adhesion between the negative electrode active material particles and the adhesion of the negative electrode active material to the negative electrode current collector. Specific examples may include polytetrafluoroethylene (PTFE), polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof, and one or a mixture of two or more selected therefrom may be used.

The binder may be comprised in an amount of 1 to 30% by weight, preferably 1 to 20% by weight, more preferably 1 to 10% by weight, based on the total weight of the negative electrode active material layer.

As the solid electrolyte, any solid electrolyte known in the art may be used without limitation, for example, an oxide-based solid electrolyte, a polymer-based solid electrolyte, or a sulfide-based solid electrolyte may be used, and in particular, a sulfide-based solid electrolyte may be preferably used. As the sulfide-based solid electrolyte, any of the sulfide-based solid electrolytes previously described may be used.

The solid electrolyte may be comprised in an amount of 1 to 30% by weight, preferably 1 to 20% by weight, more preferably 10 to 20% by weight, based on the total weight of the negative electrode active material layer.

The negative electrode active material layer may be prepared by applying and drying a negative electrode slurry, or by casting the negative electrode slurry onto a separate support and then laminating the film obtained by peeling it off from the support onto the negative electrode current collector.

### (3) Solid electrolyte layer

The solid electrolyte layer comprises a solid electrolyte capable of migrating ions. As the solid electrolyte, any solid electrolyte known in the art may be used without limitation, for example, an oxide-based solid electrolyte, a polymer-based solid electrolyte, or a sulfide-based solid electrolyte may be used, and in particular, a sulfide-based solid electrolyte may be preferably used. As the sulfide-based solid electrolyte, any of the sulfide-based solid electrolytes previously described may be used.

The solid electrolyte may be in an amorphous state or a crystalline state. It can also be a mixture of amorphous and crystalline.

The solid electrolyte layer may further comprise a binder. The binder material can be, for example, a resin such as styrene butadiene rubber (SBR), polytetrafluoroethylene, polyvinylidene fluoride, polyethylene, polyacrylic acid, and the like. The binder may be the same as the material comprised in the binder in the positive electrode active material layer and the negative electrode active material layer, or it may be different.

In the lithium-ion secondary battery of the present invention, for other configurations than the above positive electrode active material composite, configurations known in the art may be applied without limitation. Therefore, more specific explanations are omitted.

### [Mode for Practicing the Invention]

Hereinafter, the present invention will be described with reference to examples to illustrate the invention in detail. However, examples according to the present invention may be modified in many other ways, and the scope of the present invention should not be construed as being limited to the examples described below. The examples of the present invention are provided to more fully illustrate the invention to one of ordinary skill in the art.

### Example 1: Manufacturing a positive electrode active material composite

### (1) Manufacturing a positive electrode active material substrate

Li₂CO₃ and Ni_{0.8}Co_{0.1}Mn_{0.1}(OH)₂ were mixed with a mixer in a weight ratio of 1.1:1 to form a reaction mixture, and then the reaction mixture was placed in a crucible made of stainless steel and subjected to a first heat treatment at 600°C, ambient atmosphere for 5 hours to form a plasticized mixture, and then cooled. Subsequently, it was quenched, sieved, and the crushed plasticized mixture was placed in an aluminum crucible and subjected to a second heat treatment at 800°C, ambient atmosphere for 10 hours to prepare LiNi_{0.8}Co_{0.1}Mn_{0.1}O₂ with a particle size (D50) of 5 µm.

### (2) Manufacturing a coating substrate

Li₂CO₃, TiO₂, and Melamine(C₃N₃(NH₂)₃) were added in stoichiometric proportions and mixed for 4 hours in a mortar, then loaded into a tube furnace with an inner diameter of 50 mm and a length of 1,000 mm, and heat treated at 700°C for 12 hours to prepare Li₄Ti₅O_{11.8}N_{0.2}.

### (3) Manufacturing a positive electrode active material composite

As the positive electrode active material substrate prepared in (1) above, 99 g of LiNi_{0.8}Co_{0.1}Mn_{0.1}O₂ powder having a particle diameter (D50) of 5 µm and 1 g of Li₄Ti₅O_{11.8}N_{0.2} powder prepared in (2) above were placed in a container and mixed for 1 min at 5,000 rpm using a Lab Blender (manufactured by Waring) without using any solvent. Next, the above mixture was subjected to high shear mixing (NOB-130, Hosokawa Micron) at 3,000 rpm for 10 min to prepare a positive electrode active material composite with a Li₄Ti₅O_{11.8}N_{0.2} coating layer formed on a LiNi_{0.8}Co_{0.1}Mn_{0.1}O₂ substrate.

### Example 2: Manufacturing a positive electrode active material composite

Li₂CO₃, TiO₂, and NH₄H₂PO₄ were added in stoichiometric proportions, mixed in a mortar for 4 hours, and then loaded into a tube furnace with an inner diameter of 50 mm and a length of 1,000 mm, and heat treated at 800°C for 6 hours to produce Li₄Ti₅O_{11.8}P_{0.2}.

The positive electrode active material composite in which Li₄Ti₅O_{11.8}P_{0.2} was coated on LiNi_{0.8}Co_{0.1}Mn_{0.1}O₂ substrate was prepared by the same method as in Example 1, except that Li₄Ti₅O_{11.8}P_{0.2} prepared above was used instead of Li₄Ti₅O_{11.8}N_{0.2} in Example 1.

### Example 3: Manufacturing a positive electrode active material composite

Titanium(IV) isopropoxide (Ti(OC₃H₇)₄), lithium hydroxide (LiOH), and thioacetamide (C₂H₅NS) were dissolved in stoichiometric proportions in a mixture of ethanol and distilled water (with a weight ratio of 3:1) and mixed for about 2 hours to prepare the solution.

LiNi_{0.8}CO_{0.1}Mn_{0.1}O₂ prepared by the same method as in Example 1 was added to the solution prepared above, and then vacuum dried at 80°C.

Finally, it was loaded into a tube furnace with an inner diameter of 50 mm and a length of 1,000 mm and heat treated at 600°C for 10 hours to produce a positive electrode active material composite in which Li₄Ti₅O_{11.8}S_{0.2} is coated on LiNi_{0.8}Co_{0.1}Mn_{0.1}O₂ substrate.

### Comparative Example 1: Manufacturing a positive electrode active material composite

Li₂CO₃ and TiO₂ were added in a weight ratio of 1:2.5 and mixed in a mortar for four hours, then loaded into a tube furnace with an inner diameter of 50 mm and a length of 1,000 mm, and heat treated at 800°C for 12 hours to prepare Li₄Ti₅O₁₂.

The positive electrode active material composite in which Li₄Ti₅O₁₂ was coated on LiNi_{0.8}Co_{0.1}Mn_{0.1}O₂ substrate was prepared by the same method as in Example 1, except that Li₄Ti₅O₁₂ prepared above was used instead of Li₄Ti₅O_{11.8}N_{0.2} in Example 1.

### Examples 4 to 6 and Comparative Example 2: Manufacturing an all-solid-state lithium-ion secondary battery

### (1) Manufacturing a positive electrode

81.9% by weight of each of the positive electrode active material composites prepared in Examples 1 to 3 and Comparative Example 1, 15.6% by weight of solid electrolyte LPS (Li₆PS₅Cl), 1.5% by weight of carbon black powder, and 1% by weight of PTFE as a binder were mixed for 1 min at 5000 rpm without solvent using a Lab Blender (Waring) (primary mixing). Next, high shear mixing (using PBV-0.1L, Irie Shokai) was performed by applying a shear force of 100N to the mixture to prepare dough (secondary mixing). Next, the dough was used to manufacture an electrode layer with a free-standing structure using a two roll mill MR-3 (Inoue).

The electrode layer was placed on one side of the aluminum current collector with a thickness of 15 µm and pressurized to produce each positive electrode.

### (2) Manufacturing an all-solid-state lithium-ion secondary battery

Lithium metal with a thickness of 40 µm was used as the negative electrode, and a Li₆PS₅Cl solid electrolyte film with a thickness of 50 µm was interposed between the respective positive electrode and the negative electrode, and then pressurized at a pressure of 500 MPa, to prepare jig cells of Examples 4 to 6 and Comparative Example 2 with a driving pressure of 3 MPa and a capacity of 5 mAh.

### Experimental Example 1: Evaluating the characteristics of a battery

### (1) Evaluating the initial discharge capacity, efficiency of an all-solid-state battery

The jig cells prepared in Examples 4 to 6 and Comparative Example 2 were charged at a rate (C-rate) of 0.1C until the voltage was 4.25V (vs. Li) and then cut-off at a rate of 0.05C while maintaining 4.25V (vs. Li). It was then discharged at a rate (C-rate) of 0.1C until the voltage at discharge was 3.0V (vs. Li) (1^{st} cycle). The initial efficiency was calculated as discharge capacity/charge capacity x 100 (%). The results of the experiments are shown in Table 1 below.

### (2) Evaluating the life characteristics of the all-solid-state battery

The jig cells prepared in Examples 4 to 6 and Comparative Example 2 were charged at a rate (C-rate) of 0.33C until the voltage was 4.25V (vs. Li) and then cut-off at a rate of 0.1C while maintaining 4.25V (vs. Li). It was then discharged at a rate (C-rate) of 0.33C until the voltage at discharge was 3.0V (vs. Li) (1^{st} cycle). This charge and discharge test was repeated for 50 cycles to measure the capacity retention of the discharge capacity. The results of the experiments are shown in Table 1 below.

**[Table 1]**

| Test Cells | Positive electrode active material composite | Coating material | Coating content | Initial capacity at 0.1C (mAh) | Initial efficiency at 0.1C (%) | Lifetime characteristic Capacity retention (%) at 0.33C for 50 cycles |
|---|---|---|---|---|---|---|
| Example 4 | NCM-LTON₂ | Li₄Ti₅O_{11.8}N_{0.2} | 1% by weight | 5.0 | 94.9 | 96.0 |
| Example 5 | NCM-LTOP₂ | Li₄Ti₅O_{11.8}P_{0.2} | | 5.0 | 94.4 | 95.1 |
| Example 6 | NCM-LTOS₂ | LI₄Ti₅O_{11.8}S_{0.2} | | 5.0 | 94.6 | 96.6 |
| Comparative Example 2 | NCM-LTO | Li₄TiO₁₂ | | 4.7 | 90.1 | 83.2 |

## Claims

1. A positive electrode active material composite comprising a positive electrode active material substrate and a coating layer comprising a compound represented by Formula 1 below coated on the positive electrode active material substrate.
[Formula 1] LiₐTi_{b}O_{c-d}X_{d}
wherein X is N, P, or S; and
1≤a≤6, 1≤b≤6, 3≤c≤15, and 0<d≤1.5.

2. The positive electrode active material composite according to claim 1,
wherein a is 4, b is 5, c is 12, and d is 0.1 to 0.3.

3. The positive electrode active material composite according to claim 1,
wherein the positive electrode active material substrate is a compound represented by Formula 2 below.
[Formula 2] Liₐ(Ni_{1-x-y-z}CoₓM1_{y}M2_{z})O₂
wherein M1 is manganese (Mn), aluminum (Al), or a combination thereof;
M2 is boron (B), magnesium (Mg), calcium (Ca), strontium (Sr), barium (Ba), titanium (Ti), vanadium (V), chromium (Cr), iron (Fe), copper (Cu), zirconium (Zr), aluminum (Al), or any combination of two or more thereof; and
0.95≤a≤1.3, 0<x<1, 0≤y<1, and 0≤z<1.

4. The positive electrode active material composite according to claim 1,
wherein the coating layer is comprised in an amount of 0.1 to 5% by weight based on the total weight of the positive electrode active material composite.

5. The positive electrode active material composite according to claim 1,
wherein the coating layer has a thickness of 10 nm to 200 nm.

6. The positive electrode active material composite according to claim 1,
wherein the molar ratio of Ti and X in the coating layer is 1 : 0.01 to 0.2.

7. The positive electrode active material composite according to claim 1,
wherein the coating layer is formed by dry mixing of a positive electrode active material substrate and a coating substrate.

8. A positive electrode comprising the positive electrode active material composite according to claim 1.

9. The positive electrode according to claim 8,
which further contains a sulfide-based solid electrolyte.

10. The positive electrode according to claim 9,
wherein the sulfide-based solid electrolyte is a compound represented by Formula 3 below.
[Formula 3] LiₓM'_{y}PS_{z}A_{w}
wherein x, y, z, and w are independently 0 to 6;
M' is at least one of As, Ge, Ga, Sb, Si, Sn, Al, In, Ti, V, Nb, or Ta; and
A is at least one of F, Cl, Br, or I.

11. A lithium-ion secondary battery comprising a positive electrode according to claim 8, a negative electrode, and a solid electrolyte layer disposed between the positive electrode and negative electrode.

12. The lithium-ion secondary battery according to claim 11,
wherein the lithium-ion secondary battery is a sulfide-based all-solid-state battery.
